# EUROPEAN PATENT SPECIFICATION

(11) **EP 3 910 248 B1**
(45) Date of publication and mention of the grant of the patent: **17.07.2024**
(21) Application number: 21173402.5
(22) Date of filing: 11.05.2021
(51) Int. Cl.: F24D 3/14

(54) **RADIANT PANEL**
STRAHLUNGSPANEEL
PANNEAU RADIANT

(30) Priority: 12.05.2020 IT 202000010759
(43) Date of publication of application: 17.11.2021
(73) Proprietor: RAYGEX S.R.L., 35030 Saccolongo (PD) (IT)
(72) Inventor: FUGOLO, Andrea, 35141 Padova (IT)
(74) Representative: Morabito, Sara

(56) References cited:
- EP-A1- 0 592 159
- EP-A1- 2 239 512
- EP-A1- 3 296 646
- DE-A1- 102006 056 730

## Description

### Technical field

The present invention relates to a radiant panel for heating and/or cooling environments.

### Technological background

The invention is used particularly, though not exclusively, in the technical field relating to thermal conditioning of environments, in particular of closed spaces. In this technical field, it is known to use radiant panels or more generally radiant systems, that is to say, systems which use heat exchange for irradiation between a thermovector fluid which flows in suitable pipes and the surrounding environment in order to heat or cool it.

Examples of radiant panels are described in the patent applications EP1004827A1, EP2239512A1 and in the Italian Patent Application No. 102007901503949.

Additional examples of radiant panels are described in DE102006056730, EP3296646A1, EP199808030703A, EP0592159A1, EP2672187A1 and DE8107402U1.

However, it may be observed that the known radiant panels may be subject to some drawbacks.

A first limitation of such panels is the poor adaptability to being connected to main lines of a conditioning plant which have an arrangement and a type of hydraulic intake and return connections for a thermovector fluid different from those of the panels.

Additional limitations of the known radiant panels may be defined as an excessive spatial requirement thereof, an ease of becoming damaged during the transport thereof and/or the relatively high cost for producing panels with different dimensions.

### Statement of invention

An object of the present invention is to provide a radiant panel which is structurally and functionally configured to overcome at least one drawback of the above-cited prior art.

This object is achieved by means of a radiant panel which is constructed according to the independent claim appended to the present description.

Preferred features of the invention are defined in the dependent claims.

According to a first aspect of the invention, the radiant panel comprises at least one conduit for the flow of a thermovector fluid and a first plate which is provided with a seat which is formed to receive at least a portion of the at least one conduit.

Preferably, the perimeter of the first plate defines the perimeter of the radiant panel.

Preferably, the first plate is provided with a groove which defines the seat which receives at least a portion of the at least one conduit.

The first plate is or can be connected to a second plate in such a manner that the first plate and the second plate are positioned one above the other and the at least one conduit extends between them.

Preferably, the first plate is or can be connected to the second plate by using adhesives and/or foams and/or bi-adhesives and/or glues which are known and/or screws and/or clips or the first plate can be simply supported on the second plate.

According to an aspect of the invention, the at least one conduit is constructed by a single tube or by a plurality of tubes which are connected to each other by means of connection elements.

Preferably, the tube or plurality of tubes mentioned above are constructed from one of the following materials: polyethylene, polybutylene, other plastics material.

Additionally or alternatively, the tube or the plurality of tubes mentioned above can be constructed from one or a combination of the following materials: copper, aluminium or other metal material.

According to an aspect of the invention, the at least one conduit forms a closed circuit.

In particular, the closed circuit is constituted by a closed line, therefore a line which does not have ends.

According to an aspect of the invention, the at least one conduit does not have ends, in particular free ends, the ends being open (that is to say, provided with an opening for the introduction or discharge of a thermovector fluid into/from the conduit) or closed.

This feature is found to be particularly advantageous from the point of view of adaptability of the radiant panel to conditioning plants having different configurations.

In fact, the characteristics of the radiant panel according to the invention allow the formation in any zone of the at least one conduit of a first opening for introducing the thermovector fluid into the conduit and a second opening for discharging this fluid from the conduit.

Therefore, the provision of a conduit with a closed circuit allows the zones of the conduit which are most appropriate to be selected, for example, in terms of arrangement, in order to form the openings for connecting the radiant panel to a conditioning plant for the passage of a thermovector fluid.

In specific terms, the conduit can be sectioned in the region of a desired location consequently obtaining an open circuit, the ends of which are provided with respective holes, of which one defines the first opening and the other defines the second opening of the conduit for the passage of the thermovector fluid.

On the contrary, it is the opinion of the Applicant that the radiant panels described in EP2239512A1, EP3296646A1, EP199808030703A, EP0592159A1, EP2672187A1 and DE8107402U1 are always provided with free open ends for connection to an external pipe, thereby forming open circuits.

It must be noted that if the circuit is open then the position of the supply to the radiant panel is necessarily established beforehand and fixed a priori. According to an aspect of the invention, the at least one conduit does not have one or more openings when it forms a closed circuit.

This prevents the internal cavity of the at least one conduit from becoming soiled.

Preferably, the first and/or second plate(s) extend(s) mainly in two directions which are orthogonal to each other and of which one defines the longitudinal extent and the other defines the transverse extent of the plates.

The longitudinal extent of the plates defines the length thereof while the transverse extent thereof defines the width of the plates. The extent of the plates in a third direction, which is orthogonal to the other two directions, defines the thickness thereof.

Preferably, the first plate and/or the second plate is/are of quadrilateral form, in particular rectangular form, more particularly of square form.

Examples of possible dimensions of the first plate and/or the second rectangular plate are: 200x120 cm, 250x120 cm, 300x120 cm, 240x120 cm. The first plate and/or the second plate may further be of circular or elliptical form, or may have more than four sides (known as multi-sided).

Examples of possible thicknesses of the first plate and/or the second plate are: 6 mm, 10 mm, 13 mm, 15 mm, 18 mm.

According to an embodiment of the invention, the radiant panel comprises the second plate. The second plate is connected to the first plate and delimits therewith the perimeter of the radiant panel.

According to an embodiment of the invention, the radiant panel is provided in the region of a peripheral zone thereof with an opening and the at least one conduit comprises a first section which extends inside or outside the perimeter of the radiant panel, in the region of this opening.

The provision of the opening allows access to the first section of the conduit while avoiding the construction of additional openings in the radiant panel.

In particular, the opening is formed in the second plate.

Preferably, the opening is of elongate form and extends longitudinally along an edge of the radiant panel.

In the particular case of a radiant panel having a rectangular form, the opening is preferably arranged in the region of a long side or a short side of the radiant panel.

According to an aspect of the invention, the radiant panel may comprise a plurality of openings which are arranged in different peripheral zones of the radiant panel.

According to the invention, the at least one conduit extends completely inside the perimeter of the radiant panel.

This feature prevents damage to the radiant panel, in particular the at least one conduit, during the transport and/or installation operations of the radiant panel.

Furthermore, this feature allows a reduction of the dimensional measurements of the radiant panel because the conduit does not leave the perimeter of the radiant panel.

According to an embodiment of the invention, the first section comprises a curved portion, in particular an annular portion.

Preferably, the first section comprises two substantially rectilinear portions, between which the curved portion extends.

The curved portion, in particular the annular portion, is intended to be cut in a transverse direction relative to the longitudinal development of the at least one conduit in order to obtain two end portions of the at least one conduit which are each provided with a respective opening for the passage of the thermovector fluid in the conduit and therefore in the radiant panel.

Furthermore, the curved portion, in particular the annular portion, promotes the gripping of the first section in such a manner that it can be moved, as better described below.

Preferably, the opening of the radiant panel comprises, in the region of the curved portion, a widened portion which extends in the direction which defines the thickness of the radiant panel.

This allows the gripping of the curved portion from outside the radiant panel to be facilitated.

According to an embodiment of the invention, the at least one conduit comprises a flexible portion which is adjacent to the first section. The configuration of the flexible portion is movable between a first configuration, in which the first section extends inside the perimeter of the radiant panel, and a second configuration, in which the first section extends outside the perimeter of the radiant panel through the opening in the peripheral zone mentioned above.

In particular, the flexible portion has a curved development in the first configuration and a substantially rectilinear development in the second configuration.

This feature is found to be particularly advantageous in order to allow the removal of the first section of the plates, that is to say, to allow the movement of the first section from an initial condition, in which the first section extends inside the perimeter of the radiant panel, to a final condition, in which the first section extends outside the perimeter of the radiant panel.

By way of example, a hook may be used to grip the curved portion, in particular the annular portion, of the first section and to remove it from the plates.

Preferably, the flexible portion of the at least one conduit is produced from one of the following materials: polyethylene, polybutylene, other plastics material. Additionally or alternatively, the flexible portion of the at least one conduit can be produced from one of the following materials: copper, aluminium or other metal material.

According to an embodiment of the invention, the at least one conduit comprises a section which has a helical or sinuous development.

This feature allows better heating (or cooling) by irradiation of the environment surrounding the radiant panel.

According to an embodiment of the invention, the at least one conduit comprises a pair of continuous paths which involve respective mutually adjacent zones of the radiant panel.

Preferably, the continuous paths have a helical or sinuous development.

Preferably, the continuous paths have the same configuration and/or dimensions.

The continuous paths are connected to each other by means of a pair of first sections which extend in the region of the same opening or respective openings which are placed in the region of a peripheral zone of the radiant panel.

This feature allows the radiant panel to be subdivided into a plurality of modules which correspond to the respective continuous paths.

These modules can be obtained by cutting the pair of above-mentioned first sections and by dividing the radiant panel in the region of a line which extends between the two adjacent zones of the radiant panel which are involved with the respective continuous paths.

According to an embodiment of the invention, the at least one conduit comprises a pair of continuous paths which involve respective mutually adjacent zones of the radiant panel. These continuous paths are connected to each other by means of a pair of sections of the at least one conduit which extend in the region of a central zone of the radiant panel.

This allows a connection of this pair of continuous paths in a parallel manner to a main substantially rectilinear tube, the tube also being referred to as a dorsal tube, which can be arranged in the radiant panel.

In fact, the cutting of a section of the pair of above-mentioned sections allows the production of an inlet opening and an outlet opening of the at least one conduit which can be connected to respective connections of the dorsal tube.

Preferably, the radiant panel comprises a second seat for receiving the dorsal tube. Preferably, the first plate is provided with a recess which is formed to receive the dorsal tube (in particular, a section thereof) so that it extends through the radiant panel in the longitudinal or transverse direction thereof.

Additionally or alternatively, the second plate is provided with one or more recesses which is/are formed to receive one or more tubes (for example, dorsal tubes) in such a manner that they extend through the radiant panel in the longitudinal or transverse direction thereof.

According to an embodiment of the invention, the continuous paths of the above-mentioned pair of continuous paths extend one opposite the other with respect to a plane of symmetry of the radiant panel.

The plane of symmetry comprises the longitudinal axis and it extends in the direction which defines the thickness of the radiant panel. Alternatively, the plane of symmetry comprises the transverse axis and it extends in the direction which defines the thickness of the radiant panel.

This feature is found to be particularly advantageous in order to subdivide the radiant panel into modules which have a geometric shape which is identical or similar.

The fact of being able to subdivide the radiant panel according to the invention into a plurality of modules allows one or more whole radiant panels to be kept in store, from which the above-mentioned modules (which will therefore have a dimension less than the respective radiant panel) will subsequently be obtained on the basis of particular and different installation requirements.

According to an embodiment of the invention, the radiant panel comprises two conduits which are mutually independent for the flow of a respective thermovector fluid.

These conduits extend one opposite the other with respect to a plane of symmetry of the radiant panel.

In particular, the two conduits involve respective mutually adjacent zones of the radiant panel.

The plane of symmetry, with respect to which the two conduits extend one opposite the other, comprises the longitudinal axis and it extends in the direction which defines the thickness of the radiant panel. Alternatively, this plane of symmetry comprises the transverse axis and it extends in the direction which defines the thickness of the radiant panel.

According to an embodiment of the invention, the two mutually independent conduits comprise respective pairs of continuous paths.

Preferably, the continuous paths of each pair of continuous paths extend one opposite the other with respect to a first plane of symmetry of the radiant panel and the two above-mentioned conduits extend one opposite the other with respect to a second plane of symmetry of the radiant panel, the second plane of symmetry being perpendicular to the first plane of symmetry.

This feature allows the provision of a single radiant panel which contains a plurality of conduits (therefore, closed circuits) which are separated from each other from the hydraulic point of view.

This allows subdivision of the radiant panel into a plurality of modules which correspond to the respective conduits.

These modules can be obtained by dividing the radiant panel in the region of a line which extends between the two zones of the radiant panel which are involved with the respective conduits.

According to an embodiment of the invention, the first plate and/or the second plate are provided in the region of respective external surfaces with an indicator.

In the context of the present invention, the external surface of the first plate (second plate) is the surface of this plate which extends in the two main directions thereof at the side opposite the side connected, or intended to be connected, to the second plate (first plate).

The indicator defines the bounds of the mutually adjacent zones of the radiant panel and/or the areas of the radiant panel which are involved with respective conduits in order to subdivide the radiant panel into modules which correspond to the above-mentioned zones and/or areas of the radiant panel.

By way of example, the indicator may be a graphic expression, that is to say, a sign, which can delimit the above-mentioned zones and/or areas.

Preferably, the indicator is a printed copy. More preferably, the printed copy is obtained by means of serigraphy.

It must be observed that these zones and/or areas of the radiant panel correspond to possible modules of the radiant panel itself. Therefore, the presence of the indicator allows it to be made easier to cut the radiant panel according to the invention into modules.

According to an embodiment of the invention, the at least one conduit does not have branches. In this case, the thermovector fluid can flow in the conduit along a single path (there are not parallel fluid paths). In other words, the at least one conduit is a channel (in particular, a closed channel) which does not have any sections which develop from a main body thereof.

There may further be provision for the radiant panel to comprise three or more conduits which are mutually independent for the flow of a respective thermovector fluid, in which each conduit involves a respective zone of the radiant panel.

According to an embodiment of the invention, the first plate is constructed from one or from a combination of the following materials: gypsum, plasterboard, fibreboard, metal, clay, or equivalent materials, while the second plate is constructed from thermally insulating material.

Alternatively, the first plate is constructed from a thermally insulating material and the second plate is constructed from one or from a combination of the following materials: gypsum, plasterboard, fibreboard, metal, clay, or equivalent materials.

By way of example, the thermally insulating material corresponds to one of polystyrene, polyurethane, mineral wool, wood fibres, polyester fibres, nanotechnological materials or equivalent materials, or a combination thereof. According to an embodiment of the invention, the radiant panel comprises a thermal diffuser which is arranged between the at least one conduit and one of the first plate and the second plate. Preferably, the thermal diffuser has a concavity for receiving the at least one conduit.

In particular, the thermal diffuser is a laminar element which is constructed from thermally conductive material, preferably metal material, more preferably from aluminium. By way of example, the thermal diffuser may be linear or curvilinear.

Preferably, the thermal diffuser is arranged between the at least one conduit and the plate which is constructed from one or from a combination of the following materials: gypsum, plasterboard, fibreboard, metal, clay, or equivalent materials.

Preferably, the radiant panel comprises additional seats, which are constructed in the first plate and/or in the second plate for the passage and/or the arrangement of electrical cables and/or LED devices and/or other hydraulic circuits and/or aeraulic pipes in the radiant panel.

### Brief description of the drawings

Features and additional advantages of the invention will be better appreciated from the following detailed description of preferred though non-exclusive embodiments thereof which are illustrated merely by way of non-limiting example with reference to the appended drawings, in which:
- Figure 1 is a schematic illustration of a radiant panel according to an embodiment of the invention,
- Figure 2 shows the radiant panel of Figure 1 without a second plate,
- Figure 3 is a schematic illustration of a second plate of the radiant panel of Figure 1,
- Figure 4 shows a portion of the radiant panel of Figure 1 and a detail thereof,
- Figure 5 shows the radiant panel of Figure 2 in a different configuration not according to the invention,
- Figures 6a and 6b show the radiant panel of Figure 2 in additional different configurations not according to the invention,
- Figures 7a, 7b, 8 and 9 show the radiant panel of Figure 2 subdivided into modules not according to the invention,
- Figure 10 is a schematic illustration of a radiant panel without a second plate according to an additional embodiment of the invention,
- Figure 11 shows the radiant panel of Figure 10 in a different configurations not according to the invention,
- Figures 12 and 13 show the radiant panel of Figure 10 subdivided into modules not according to the invention,
- Figure 14 is a schematic illustration of a radiant panel without a second plate according to an additional embodiment of the invention,
- Figures 15 and 16 show the radiant panel of Figure 14 in a different configuration,
- Figures 17 and 18 are a schematic illustration of additional embodiments of the radiant panel according to the invention,
- Figure 19 shows the radiant panel of Figure 1 provided with an indicator,
- Figure 20 is a schematic partial illustration of a radiant panel provided with a thermal diffuser according to an embodiment of the invention, and
- Figure 21 is an additional schematic partial illustration of a radiant panel according to an embodiment of the invention.

### Description of embodiments of the invention

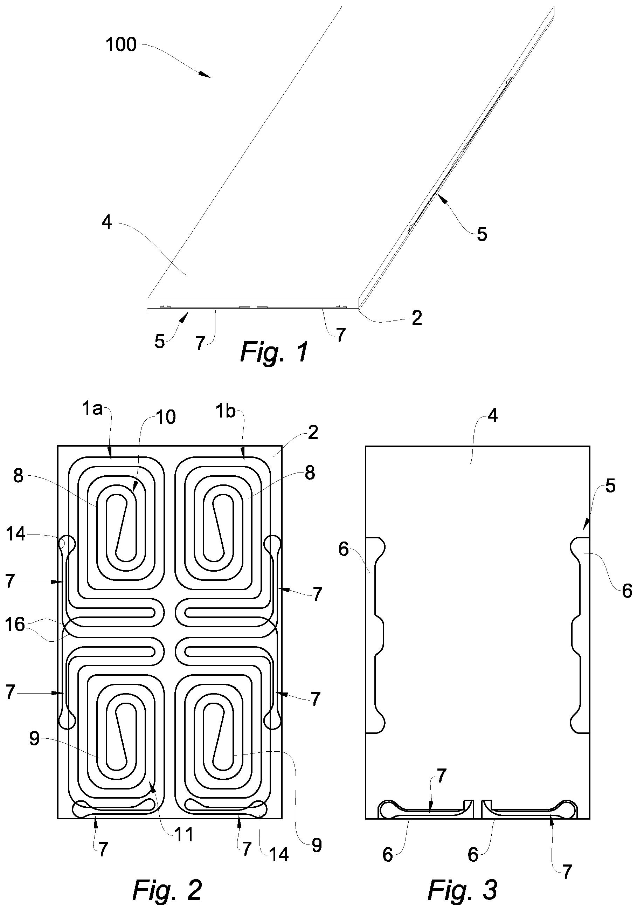

Initially with reference to Figure 1, there is generally designated 100 a radiant panel according to an embodiment of the invention.

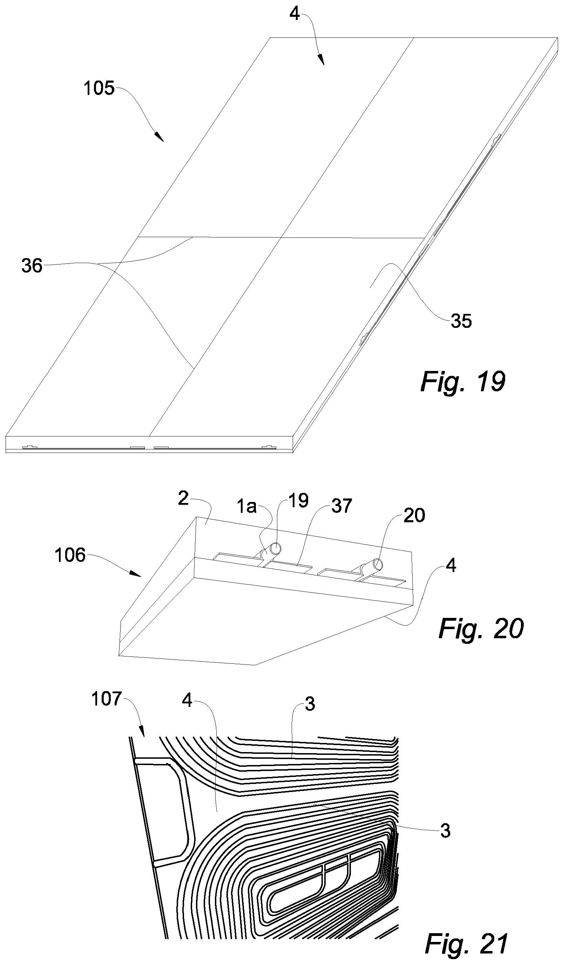

With reference to Figures 1 and 2, the radiant panel 100 comprises two conduits 1a, 1b which are mutually independent for the flow of a respective thermovector fluid, a first plate 2 which is provided with a seat 3 (illustrated by way of example in Figure 21) which is formed to receive at least a portion of the conduits 1a, 1b and a second plate 4 which is connected to the first plate 2 in such a manner that it and the second plate 4 are positioned one above the other. The two conduits 1a, 1b extend between these plates and each one forms a closed circuit which does not have either any open free ends or any closed free ends.

The first plate 2 and the second plate 4 have a rectangular shape and delimit the perimeter of the radiant panel 100.

It must be noted that the conduits 1a, 1b extend completely inside the perimeter of the radiant panel 100.

The radiant panel 100 is provided in the region of the peripheral zones 5 thereof with respective openings 6 and the conduits 1a, 1b comprise at least one respective first section 7 which extends inside the perimeter of the radiant panel 100 in the region of a respective opening 6.

With reference to Figure 3, the openings 6 are formed in the second plate 4.

Each conduit 1a, 1b comprises a pair of continuous paths 8, 9 which involve respective zones 10, 11 of the radiant panel 100 which are adjacent to each other.

These continuous paths 8, 9 are connected to each other by means of a respective pair of first sections 7 which extend in the region of the same opening 6 which is placed in the region of a peripheral zone 5 of the radiant panel 100.

With particular reference to Figure 2, the continuous paths 8 and 9 have a helical development and extend one opposite the other with respect to a first plane of symmetry 12 of the radiant panel 100.

In specific terms, the first plane of symmetry 12 comprises the transverse axis Y of the radiant panel 100 and the axis Z extends in the direction which defines the thickness of the radiant panel 100.

Furthermore, the conduits 1a, 1b extend one opposite the other with respect to a second plane of symmetry 13 of the radiant panel 100, the second plane of symmetry 13 comprising the longitudinal axis X of the radiant panel 100 and the axis Z.

The second plane of symmetry 13 is therefore perpendicular to the first plane of symmetry 12.

It must further be noted that the radiant panel shown in Figures 1 to 4 is provided with six first sections 7 which each comprise a respective curved portion, in particular the curved portion corresponds to an annular portion 14, and the openings 6 have a widened portion 15 in the region of the relevant annular portion 14. The widened portion 15 extends in the direction of the axis Z.

The conduits 1a, 1b comprise a flexible portion 16 in the region of each first section 7. Each flexible portion 16 is movable between a first configuration, in which the flexible portion 16 is curved and the relevant first section 7 extends inside the perimeter of the radiant panel 100, and a second configuration, in which the flexible portion 16 is substantially rectilinear and the relevant first section 7 extends outside the perimeter of the radiant panel 100 through the corresponding opening 6.

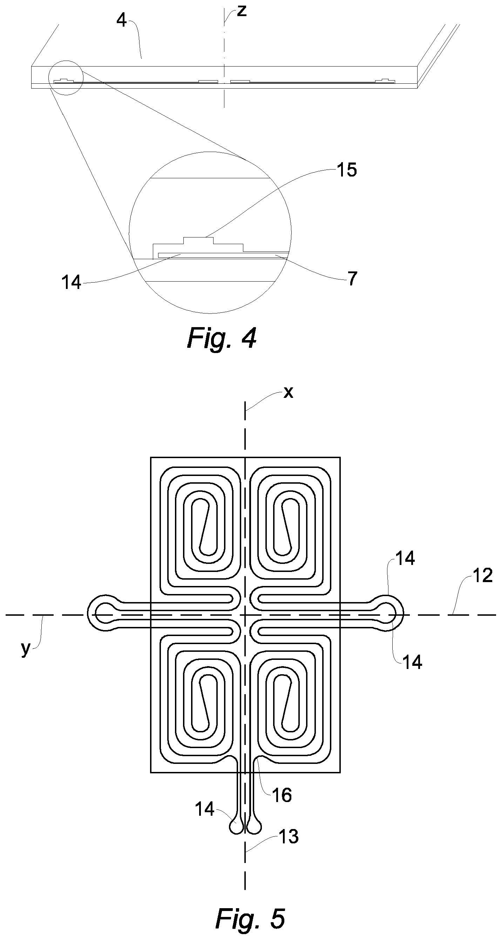

Figure 5 shows the radiant panel 100 following the removal of the first sections 7 from the plates 2 and 4.

At least one annular portion 14 is intended to be cut in order to obtain two end portions 17, 18 of the respective conduit 1a, 1b. Each end portion 17, 18 is provided with an opening 19, 20 for the passage of the thermovector fluid in the respective conduit 1a, 1b.

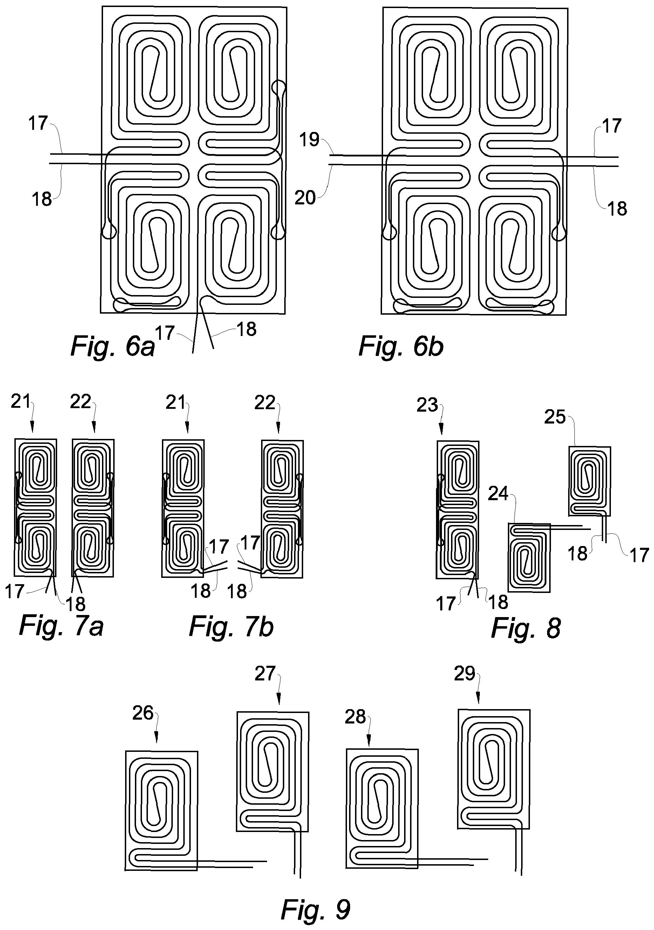

Figures 6a and 6b show the radiant panel 100 following the removal of two of the first sections 7 from the plates 2 and 4.

In particular, in Figure 6a there have been removed and cut both a first section 7 of the conduit 1a, which extends in the region of a long side of the radiant panel 100, and a first section 7 of the second conduit 1b which extends in the region of a short side of the radiant panel 100.

In a different manner, in Figure 6b there have been removed and cut a first section 7 of the conduit 1a and a first section 7 of the second conduit 1b, which both extend in the region of a long side of the radiant panel 100.

It must be observed that the radiant panel 100 can be subdivided into a plurality of modules which comprise one or more continuous paths.

In detail, the radiant panel 100 can be sectioned along the axis X and/or Y so as to obtain two modules 21, 22 comprising the respective conduits 1a and 1b (Figures 7a and 7b) or three modules, of which one 23 comprises the first conduit 1a and the other two 24, 25 correspond to the continuous paths 8 and 9 of the second conduit 1b (Figure 8), or four modules 26, 27, 28, 29 corresponding to the continuous paths of each conduit (Figure 9).

The provision of openings 6 in the region of a short side of the radiant panel 100 and of both the long sides thereof advantageously allows the selection of the position of the openings of the conduits 1a, 1b of the radiant panel 100 and allows the selection of the arrangement of the openings of the conduits (or a portion thereof) which belong to the modules which are obtained from the radiant panel 100.

This aspect may be appreciated in particular in Figures 7a, 7b, 8 and 9.

There will be described below additional embodiments of the radiant panel according to the invention. The elements of these additional embodiments of the radiant panel which correspond to those described in relation to the radiant panel designated 100 will be represented by the same reference numeral, unless otherwise specified.

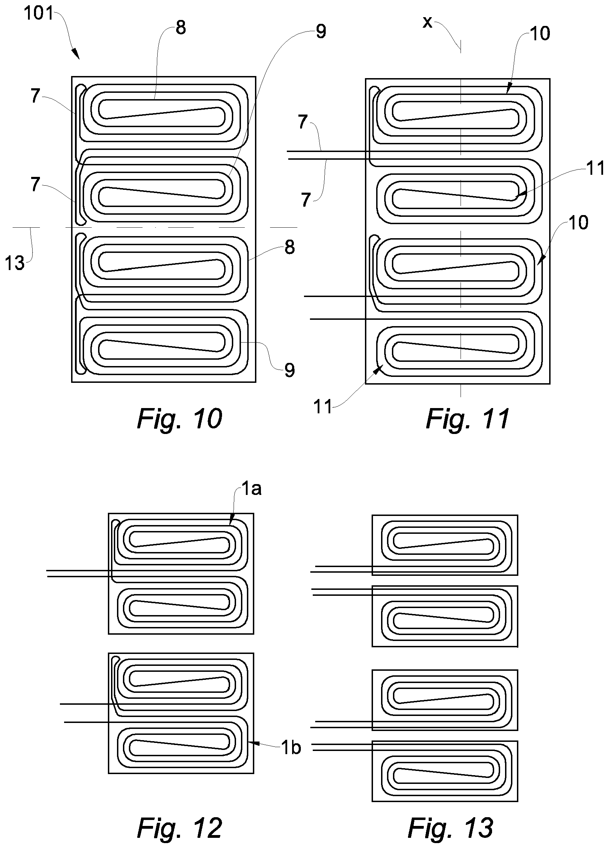

Figure 10 shows a radiant panel according to a second embodiment of the invention which is designated 101.

The radiant panel 101 shown in Figure 10 does not have the second plate 4, but it may be provided and connected to the first plate 2. The radiant panel 101 comprises two conduits 1a and 1b, which comprise a respective pair of continuous paths 8 and 9. Unlike the radiant panel 100, the continuous paths 8, 9 involve respective zones 10, 11 which are mutually adjacent along the axis X of the radiant panel 101 and conduits 1a, 1b extend one opposite the other with respect to the second plane of symmetry 13 which in this case comprises the transverse axis Y and the axis Z of the radiant panel 101.

Figure 11 shows a possible configuration of the radiant panel 101 following the removal and cutting of the first sections 7 of the conduits 1a and 1b outside the perimeter of the radiant panel 101 while Figures 12 and 13 show modules which are obtained from the radiant panel 101 following the cutting of the radiant panel 101 along the second plane of symmetry 13 (Figure 12) and along a line which extends between two adjacent zones of the radiant panel 101 which are involved with respective continuous paths 8, 9 (Figure 13).

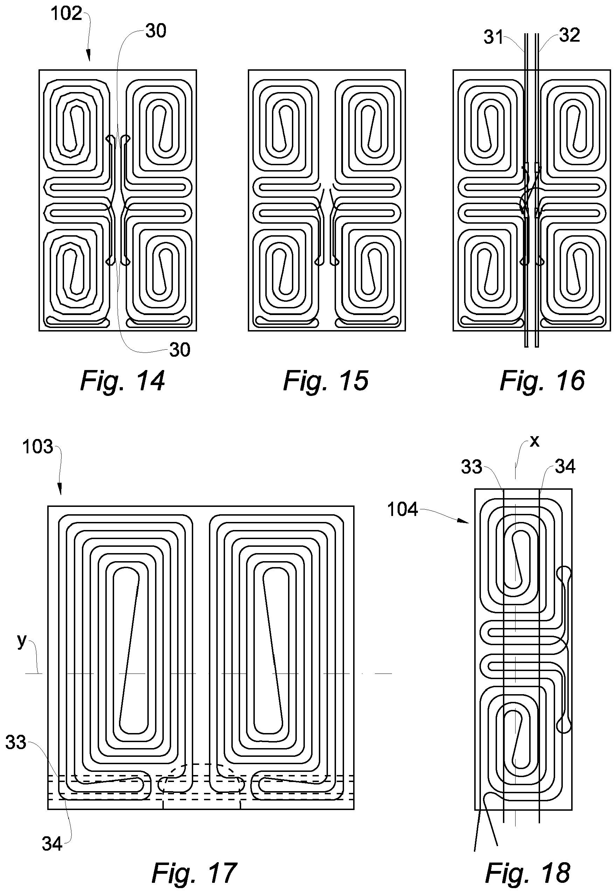

Figure 14 shows a radiant panel according to a third embodiment of the invention which is designated 102.

The radiant panel 102 shown in Figure 14 does not have the second plate 4 but this plate 4 may be provided and connected to the first plate 2.

The radiant panel 102 comprises two conduits 1a, 1b which each comprise a pair of continuous paths 8, 9 which affect respective mutually adjacent zones of the radiant panel 102. Unlike the radiant panel 100, the continuous paths 8 and 9 are connected to each other by means of a pair of sections 30 which extend in the region of a central zone of the radiant panel 102.

Figures 15 and 16 show the radiant panel 102, in which a section 30 of each conduit 1a, 1b is cut so as to obtain an inlet opening and an outlet opening for each conduit 1a, 1b (Figure 15) which are connected to respective connections of a pair of dorsal pipes 31, 32 (Figure 16).

The radiant panel 102 is therefore arranged to receive a section of the dorsal pipes 31, 32 in such a manner that they extend through the radiant panel 102 in the longitudinal direction thereof.

Figures 17 and 18 show additional embodiments of the radiant panel according to the invention which are designated 103 and 104, respectively.

The radiant panels 103 and 104 shown in Figure 17 and Figure 18, respectively, do not have the second plate 4 but this plate may be provided and connected to the first plate 2.

The radiant panels 103 and 104 each comprise a pair of parallel seats 33, 34 and extend in the direction of the axis Y (radiant panel 103) or of the axis X (radiant panel 104) for the passage and/or the arrangement of electrical cables and/or LED devices and/or dorsal pipes or additional hydraulic or aeraulic circuits in the radiant panel.

These seats are preferably constructed in the second plate.

Figure 19 shows a radiant panel according to an additional embodiment of the invention which is designated 105.

The radiant panel 105 differs from the one shown in Figure 1 in that the second plate 4 is provided in the region of the external surface 35 thereof with an indicator 36 which defines the bounds of the mutually adjacent zones of the radiant panel 105, which are involved with the respective continuous paths of the conduits 1a, 1b.

Figure 20 shows a detail of an embodiment of the radiant panel according to the invention which is designated 106. The radiant panel 106 comprises a thermal diffuser 37 which is arranged between a conduit 1a and the first plate 2.

Figure 20 further shows two openings 19, 20 for the passage of the thermovector fluid in the conduit 1a.

Figure 21 shows a detail of an embodiment of the radiant panel according to the invention which is designated 107.

In specific terms, Figure 21 shows a portion of the first plate 4 of the radiant panel 107 which is provided with grooves which define the seat 3 which is formed in order to receive respective conduits 1a and 1b.

Additional embodiments of the radiant panel may be provided according to the invention.

By way of example, the radiant panel may have a single conduit or a plurality of conduits (also more than two), each conduit extending completely inside the perimeter of the radiant panel or having the respective first external sections at the perimeter of the radiant panel.

Additionally or alternatively, the radiant panel may have a square form.

Additionally or alternatively, the radiant panel may not have the second plate.

Additionally or alternatively, the conduit (or at least one conduit in the case of a plurality of conduits in the radiant panel) comprises a single continuous path (for example, having a helical or sinuous development) or a plurality of continuous paths (also more than two) which involve respective zones of the radiant panel, preferably adjacent to each other in pairs, these continuous paths being connected in pairs by means of a respective pair of first sections.

The invention thereby achieves the objective set out, at the same time affording the advantages mentioned above.

## Claims

1. A radiant panel (100; 101; 102; 103; 104; 105; 106; 107) which comprises at least one conduit (1a, 1b) for the flow of a thermovector fluid and a first plate (2) which is provided with a seat (3) which is formed to receive at least a portion of the at least one conduit (1a, 1b), the first plate (2) being or being able to be connected to a second plate (4) in such a manner that the first plate (2) and the second plate (4) are positioned one above the other and the at least one conduit (1a, 1b) extends between them, **characterized in that** the at least one conduit (1a, 1b) forms a closed circuit, wherein the at least one conduit (1a, 1b) does not have any free ends, whether they are open or closed, wherein the at least one conduit (1a, 1b) extends completely inside the perimeter of the radiant panel (100).

2. A radiant panel according to claim 1, wherein the radiant panel (100) comprises the second plate (4), this plate being connected to the first plate (2) and delimiting therewith the perimeter of the radiant panel (100) and is provided, in the region of a peripheral zone (5) thereof, with an opening (6), and wherein the at least one conduit (1a, 1b) comprises a first section (7) which extends inside or outside the perimeter of the radiant panel (100), in the region of the opening (6).

3. A radiant panel according to claim 1 or 2, wherein the first section (7) comprises a curved portion, in particular an annular portion (14).

4. A radiant panel according to any one of claims 2 to 3, wherein the at least one conduit (1a, 1b) comprises a flexible portion (16) which is adjacent to the first section (7), the configuration of the flexible portion (16) being movable between a first configuration, in which the first section (7) extends inside the perimeter of the radiant panel (100), and a second configuration, in which the first section (7) extends outside the perimeter of the radiant panel (100) through the opening (6).

5. A radiant panel according to any one of the preceding claims, wherein the at least one conduit (1a, 1b) comprises a section which has a helical or sinuous development.

6. A radiant panel according to any one of claims 2 to 5, wherein the at least one conduit (1a, 1b) comprises a pair of continuous paths (8, 9) which involve respective mutually adjacent zones (10, 11) of the radiant panel (100), the continuous paths (8, 9) being connected to each other by means of a pair of the first sections (7) which extend in the region of the same opening (6) or respective openings positioned in the region of a peripheral zone (5) of the radiant panel (100).

7. A radiant panel according to any one of claims 1 to 5, wherein the at least one conduit (1a, 1b) comprises a pair of continuous paths (8, 9) which involve respective mutually adjacent zones (10, 11) of the radiant panel (102), the continuous paths (8, 9) being connected to each other by means of a pair of sections (30) of the at least one conduit (1a, 1b) which extend in the region of a central zone of the radiant panel (102).

8. A radiant panel according to claim 6 or 7, wherein the continuous paths of the pair of continuous paths (8, 9) extend one opposite the other with respect to a plane of symmetry (12) of the radiant panel (100).

9. A radiant panel according to any one of the preceding claims, comprising two conduits (1a, 1b) which are mutually independent for the flow of a respective thermovector fluid, wherein the conduits (1a, 1b) extend one opposite the other with respect to a plane of symmetry (13) of the radiant panel (100; 101).

10. A radiant panel according to any one of claims 6 to 9, wherein the first plate (2) and/or second plate (4) are provided, in the region of respective external surfaces (35), with an indicator (36) which defines the bounds of the mutually adjacent zones of the radiant panel (105) and/or areas of the radiant panel which are involved with respective conduits (1a, 1b) in order to subdivide the radiant panel into modules corresponding to the zones and/or areas of the radiant panel.

11. A radiant panel according to any one of the preceding claims, wherein the at least one conduit (1a, 1b) does not have branches.

12. A radiant panel according to any one of the preceding claims, wherein the first plate (2) and the second plate (4) are constructed, one from a thermally insulating material and the other from one or from a combination of the following materials: gypsum, plasterboard, fibreboard, metal, clay.

13. A radiant panel according to any one of the preceding claims, comprising a thermal diffuser (37) which is arranged between the at least one conduit (1a, 1b) and one of the first plate (2) and the second plate (4).

## Patentansprüche

1. Strahlungspanel (100; 101; 102; 103; 104; 105; 106; 107), die zumindest eine Rohrleitung (1a, 1b) für die Strömung eines Thermovektorfluids und eine erste Platte (2) umfasst, die mit einem Sitz (3) versehen ist, der zum Aufnehmen zumindest eines Abschnitts der zumindest einen Rohrleitung (1a, 1b) ausgebildet ist, wobei die erste Platte (2) mit einer zweiten Platte (4) derart verbunden ist oder verbindbar ist, dass die erste Platte (2) und die zweite Platte (4) übereinander angeordnet sind und sich die zumindest eine Rohrleitung (1a, 1b) zwischen diesen erstreckt, **dadurch gekennzeichnet, dass** die zumindest eine Rohrleitung (1a, 1b) einen geschlossenen Kreislauf bildet, wobei die zumindest eine Rohrleitung (1a, 1b) keine freien Enden aufweist, unabhängig davon, ob diese offen oder geschlossen sind, wobei sich die zumindest eine Rohrleitung (1a, 1b) vollständig innerhalb des Umfangs des Strahlungspanels (100) erstreckt.

2. Strahlungspanel nach Anspruch 1, wobei das Strahlungspanel (100) die zweite Platte (4) umfasst, wobei diese Platte mit der ersten Platte (2) verbunden ist und damit den Umfang des Strahlungspanels (100) begrenzt und im Bereich einer Umfangszone (5) davon mit einer Öffnung (6) versehen ist, und wobei die zumindest eine Rohrleitung (1a, 1b) einen ersten Abschnitt (7) umfasst, der sich innerhalb oder außerhalb des Umfangs des Strahlungspanels (100) im Bereich der Öffnung (6) erstreckt.

3. Strahlungspanel nach Anspruch 1 oder 2, wobei der erste Abschnitt (7) einen gekrümmten Abschnitt, insbesondere einen ringförmigen Abschnitt (14), umfasst.

4. Strahlungspanel nach einem der Ansprüche 2 bis 3, wobei die zumindest eine Rohrleitung (1a, 1b) einen flexiblen Abschnitt (16) umfasst, der an den ersten Abschnitt (7) angrenzt, wobei die Konfiguration des flexiblen Abschnitts (16) zwischen einer ersten Konfiguration, bei der sich der erste Abschnitt (7) innerhalb des Umfangs des Strahlungspanels (100) erstreckt, und einer zweiten Konfiguration bewegbar ist, bei der sich der erste Abschnitt (7) außerhalb des Umfangs des Strahlungspanels (100) durch die Öffnung (6) erstreckt.

5. Strahlungspanel nach einem der vorhergehenden Ansprüche, wobei die zumindest eine Rohrleitung (1a, 1b) einen Abschnitt umfasst, der einen schraubenförmigen oder gewundenen Verlauf aufweist.

6. Strahlungspanel nach einem der Ansprüche 2 bis 5, wobei die zumindest eine Rohrleitung (1a, 1b) ein Paar durchgehende Wege (8, 9) umfasst, die jeweils aneinander angrenzende Zonen (10, 11) des Strahlungspanels (100) beinhalten, wobei die durchgehenden Wege (8, 9) mittels eines Paars der ersten Abschnitte (7) miteinander verbunden sind, die sich im Bereich derselben Öffnung (6) oder entsprechender Öffnungen erstrecken, die im Bereich einer Randzone (5) des Strahlungspanels (100) positioniert sind.

7. Strahlungspanel nach einem der Ansprüche 1 bis 5, wobei die zumindest eine Rohrleitung (1a, 1b) ein Paar durchgehender Wege (8, 9) umfasst, die jeweils aneinander angrenzende Zonen (10, 11) des Strahlungspanels (102) beinhalten, wobei die durchgehenden Wege (8, 9) mittels eines Paars von Abschnitten (30) der zumindest einen Rohrleitung (1a, 1b) miteinander verbunden sind, die sich im Bereich einer Mittelzone des Strahlungspanels (102) erstrecken.

8. Strahlungspanel nach Anspruch 6 oder 7, wobei sich die durchgehenden Wege des Paars durchgehender Wege (8, 9) in Bezug auf eine Symmetrieebene (12) des Strahlungspanels (100) einander gegenüberliegend erstrecken.

9. Strahlungspanel nach einem der vorhergehenden Ansprüche, umfassend zwei Rohrleitungen (1a, 1b), die für die Strömung eines jeweiligen Thermovektorfluids voneinander unabhängig sind, wobei sich die Rohrleitungen (1a, 1b) in Bezug auf eine Symmetrieebene (13) des Strahlungspanels (100; 101) einander gegenüberliegend erstrecken.

10. Strahlungspanel nach einem der Ansprüche 6 bis 9, wobei die erste Platte (2) und/oder die zweite Platte (4) im Bereich jeweiliger Außenflächen (35) mit einem Indikator (36) versehen sind, der die Grenzen der aneinander angrenzenden Zonen des Strahlungspanels (105) und/oder Abschnitte des Strahlungspanels definiert, die mit der jeweiligen Rohrleitungen (1a, 1b) verbunden sind, um das Strahlungspanel in Module zu unterteilen, die den Zonen und/oder Abschnitten des Strahlungspanels entsprechen.

11. Strahlungspanel nach einem der vorhergehenden Ansprüche, wobei die zumindest eine Rohrleitung (1a, 1b) keine Verzweigungen aufweist.

12. Strahlungspanel nach einem der vorhergehenden Ansprüche, wobei die erste Platte (2) oder die zweite Platte (4) aus einem wärmeisolierenden Material und die jeweils andere aus einem oder aus einer Kombination der Materialien Gips, Gipskartonplatten, Faserplatten, Metall, Ton hergestellt sind.

13. Strahlungspanel nach einem der vorhergehenden Ansprüche, umfassend einen Thermodiffusor (37), der zwischen der zumindest einen Rohrleitung (1a, 1b) und der ersten Platte (2) oder der zweiten Platte (4) angeordnet ist.

## Revendications

1. Panneau radiant (100; 101; 102; 103; 104; 105; 106; 107) qui comprend au moins un conduit (1a, 1b) pour l'écoulement d'un fluide thermovecteur et une première plaque (2) qui est munie d'un siège (3) qui est formé pour recevoir au moins une partie du au moins un conduit (1a, 1b), la première plaque (2) étant ou pouvant être reliée à une deuxième plaque (4) de telle manière que la première plaque (2) et la deuxième plaque (4) sont positionnées l'une au-dessus de l'autre et le au moins un conduit (1a, 1b) s'étend entre elles, **caractérisé en ce que** le au moins un conduit (1a, 1b) forme un circuit fermé, où le au moins un conduit (1a, 1b) n'a pas d'extrémités libres, qu'elles soient ouvertes ou fermées, où le au moins un conduit (la, 1b) s'étend complètement à l'intérieur du périmètre du panneau radiant (100).

2. Panneau radiant selon la revendication 1, où le panneau radiant (100) comprend la deuxième plaque (4), cette plaque étant reliée à la première plaque (2) et délimitant avec celle-ci le périmètre du panneau radiant (100) et est muni, dans la région d'une zone périphérique (5) de celui-ci, d'une ouverture (6), et où le au moins un conduit (1a, 1b) comprend une première section (7) qui s'étend à l'intérieur ou à l'extérieur du périmètre du panneau radiant (100), dans la région de l'ouverture (6).

3. Panneau radiant selon la revendication 1 ou 2, où la première section (7) comprend une partie incurvée, en particulier une partie annulaire (14).

4. Panneau radiant selon l'une quelconque des revendications 2 à 3, où le au moins un conduit (1a, 1b) comprend une partie flexible (16) qui est adjacente à la première section (7), la configuration de la partie flexible (16) étant mobile entre une première configuration, dans laquelle la première section (7) s'étend à l'intérieur du périmètre du panneau radiant (200), et une deuxième configuration, dans laquelle la première section (7) s'étend à l'extérieur du périmètre du panneau radiant (100) à travers l'ouverture (6).

5. Panneau radiant selon l'une quelconque des revendications précédentes, où le au moins un conduit (1a, 1b) comprend une section qui a un développement hélicoïdal ou sinueux.

6. Panneau radiant selon l'une quelconque des revendications 2 à 5, où le au moins un conduit (1a, 1b) comprend une paire de chemins continus (8, 9) qui impliquent des zones mutuellement adjacentes respectives (10, 11) du panneau radiant (100), les chemins continus (8, 9) étant reliés entre eux au moyen d'une paire des premières sections (7) qui s'étendent dans la région de la même ouverture (6) ou d'ouvertures respectives positionnées dans la région d'une zone périphérique (5) du panneau radiant (100).

7. Panneau radiant selon l'une quelconque des revendications 1 à 5, où le au moins un conduit (1a, 1b) comprend une paire de chemins continus (8, 9) qui impliquent des zones mutuellement adjacentes respectives (10, 11) du panneau radiant (102), les chemins continus (8, 9) étant reliés entre eux au moyen d'une paire de sections (30) du au moins un conduit (1a, 1b) qui s'étendent dans la région d'une zone centrale du panneau radiant (102).

8. Panneau radiant selon la revendication 6 ou 7, où les chemins continus de la paire de chemins continus (8, 9) s'étendent l'un en face de l'autre par rapport à un plan de symétrie (12) du panneau radiant (100).

9. Panneau radiant selon l'une quelconque des revendications précédentes, comprenant deux conduits (1a, 1b) qui sont mutuellement indépendants pour l'écoulement d'un fluide thermovecteur respectif, où les conduits (1a, 1b) s'étendent l'un en face de l'autre par rapport à un plan de symétrie (13) du panneau radiant (100; 101).

10. Panneau radiant selon l'une quelconque des revendications 6 à 9, où la première plaque (2) et/ou la deuxième plaque (4) sont munies, dans la région de surfaces externes respectives (35), d'un indicateur (36) qui définit les limites des zones mutuellement adjacentes du panneau radiant (105) et/ou d'aires du panneau radiant qui sont impliquées avec des conduits (1a, 1b) respectifs afin de subdiviser le panneau radiant en modules correspondant aux zones et/ ou aires du panneau radiant.

11. Panneau radiant selon l'une quelconque des revendications précédentes, où le au moins un conduit (1a, 1b) n'a pas de dérivations.

12. Panneau radiant selon l'une quelconque des revendications précédentes, où la première plaque (2) et la deuxième plaque (4) sont construites, l'une à partir d'un matériau thermiquement isolant et l'autre à partir de l'un ou d'une combinaison des matériaux suivants: plâtre, plaques de plâtre, panneaux de fibres, métal, argile.

13. Panneau radiant selon l'une quelconque des revendications précédentes, comprenant un diffuseur thermique (37) qui est disposé entre le au moins un conduit (1a, 1b) et l'une de la première plaque (2) et de la deuxième plaque (4).
